Europäisches Patentamt

European Patent Office

Office européen des brevets

(11) Publication number : **0 517 527 A2**

(12) # EUROPEAN PATENT APPLICATION

(21) Application number : 92305144.5

(51) Int. Cl.⁵ : **C08G 18/76, C08L 75/04**

(22) Date of filing : 04.06.92

(30) Priority : **05.06.91 JP 134375/91**

(43) Date of publication of application :
**09.12.92 Bulletin 92/50**

(84) Designated Contracting States :
**AT BE CH DE DK ES FR GB IT LI LU NL PT SE**

(71) Applicant : **DOW MITSUBISHI KASEI LIMITED**
**11-Kai, Seavans N-Kan, 2-1, Shibaura 1-chome**
**Minato-ku, Tokyo 105 (JP)**

(72) Inventor : **Yamaguchi, Shigeru**
**1723-7, Tsurumaki**
**Hatano-shi, Kanagawa 257 (US)**
Inventor : **Katano, Hiroaki**
**1351-1, Miho-cho, Midori-ku**
**Yokohama-shi, Kanagawa 226 (US)**

(74) Representative : **Raynor, John**
**W.H. Beck, Greener & Co 7 Stone Buildings**
**Lincoln's Inn**
**London WC2A 3SZ (GB)**

(54) **Polyisocyanate composition.**

(57)  A polyisocyanate composition having excellent storage stability at low temperature, comprising a specific diphenylmethane diisocyanate oligomer or a derivative which contains a specific amount of a denatured silicone oil which is inactive to polyisocyanate.

EP 0 517 527 A2

Jouve, 18, rue Saint-Denis, 75001 PARIS

This invention relates to a polyisocyanate composition having excellent storage stability at low temperatures.

Polyisocyanates such as polymethylene prophenyl polyisocyanate ("Polymeric MDI" or "C-MDI") are widely utilized in the production of automotive interior parts such as steering wheel and instrument pads, daily necessities such as adhesives, heat insulators for electric refrigerators, and other structural heat insulators such as wall panels, pipes and tanks for use in various fields.

Polymeric MDI and its derivatives are widely utilized in the production of many polyurethane products. Accordingly, it must be capable of accommodating a wide range of storage conditions. There are few cases in which the storage conditions are strictly controlled. For example, the storage temperature is not usually controlled when foams are produced in the construction industry. In winter time, the material storage temperature may often reach as low as -10°C even in climates not normally considered extreme. Research and development activities for improving the storage stability of polymeric MDI containing more than 40 weight percent of diphenylmethane diisocyanate "MDI" and its derivatives are being continued. As a result, some polymeric MDIs, having a viscosity of about 170 cps at 25°C, which have excellent storage stability with no crystallization even at -10°C, are sold commercially by some isocyanate makers.

However, polymeric MDI, having lower viscosity of less than 160 cps, especially, 55 to 140 cps at 25°C, often contains a large amount of MDI having a melting point of 38°C. As a result, MDI tends to separate from polymeric MDI at low temperatures, for example about -10°C, creating a problem in storage stability.

Since the introduction of new regulations in 1990, the demand for polymeric MDI having lower viscosity and excellent storage stability at low temperature has been increasing. Foam makers often impose severe requirements on isocyanate makers regarding storage stability of polyisocyanates at low temperatures. However, there has not hitherto been any proposal to incorporate additives which are soluble in polymeric MDI which result only in minimal changes in its reactivity and in the characteristics of the resulting polyurethane resins, and without reducing significantly the isocyanate content.

Polymeric MDI usually contains a small amount of insoluble dimer prepared by the bonding between NCO groups. The dimer content in polymeric MDI delicately affects its storage stability at low temperature. Since such dimer is easily formed at higher temperatures, it is necessary to pay close attention to storing polymeric MDI, and a polyisocyanate having good storage stability at low temperatures is much needed.

We have discovered that low temperature storage stability can be improved by employing a polyisocyanate composition containing a specific amount of a denatured silicone oil. The invention provides a polyisocyanate composition comprising diphenylmethane diisocyanate oligomer and from 40 to 62 weight percent, based on the total polyisocyanate, of diphenylmethane diisocyanate or a derivative thereof, wherein the composition also comprises from 0.0001 to 4 parts by weight per 100 parts by weight of polyisocyanate of denatured silicone oil which is inactive to the polyisocyanate.

The polyisocyanate compound to be employed in the invention is MDI oligomer containing from 40 to 62 weight percent MDI, and/or its derivatives. The MDI content is preferably from 44 weight percent, more preferably, 45 weight percent up to 55 weight percent, more preferably, up to 52 weight percent. Some examples of such MDI oligomer are as follows: denatured carbodiimide having carbodiimide bonding introduced by employing well known phosphorus-based catalyst, denatured isocyanate having uretodion bonding or uretoimine bonding, and denatured polyol, having terminal NCO groups, prepared by the reaction of a polyisocyanate and a polyol. All polyols for the production of ordinary polyurethanes can be employed as said polyol in the invention. As for said polyisocyanate compound, a single compound or a mixture of two or more compounds can be employed in the invention. Polymeric MDI is a polymer of said MDI. Its NCO content is from 28 to 32 weight percent and its viscosity at 25°C is from 55 to 140 cps.

Silicone oil is known as a fluid substance, "polysiloxane" having a linear structure, and is prepared by the hydrolysis and the condensation polymerization of dialkyldichloro silane as the main component, with trialkylmonochloro silane as the terminal component.

The denatured silicone oil to be employed in this invention is silicone which is prepared by denaturing a part of the bonds between silicon and alkyl groups in such silicone oil by various methods. Such denatured silicone oil is inactive to polyisocyanates. Some examples of denatured silicone oil are as follows: polyether-type silicone oil having polyoxyalkylene groups replacing alkyl groups in side chains of the terminal region of polysiloxane, methylstryrl-type silicone oil having methylstyryl groups, alkyl-type silicone oils having alkyl groups other than ones originating from polysiloxane, higher fatty acid ester-type silicone oils having higher fatty acid ester group, higher alkoxy-type silicone oils having higher alkoxy groups, fluoro-type silicone oils having fluoroalkyl groups and etc.

Polyether-type silicone oils are preferred. Polysiloxane-polyoxyalkyleneoxide copolymers prepared by the graft-copolymerization of polysiloxane and polyoxyalkylene polyol in the presence of acid catalyst are examples of this polyether-type silicone oil. Preferably polyoxyalkylene oxides are polyethylene glycol and polypropylene glycol. The copolymer preferably has a molecular weight (weight average) of at least 1,000, preferably at least 3,000 to 50,000, and preferably up to 30,000. Its siloxane content is preferably at least 10 weight percent, preferably at least 20 weight percent up to 90 weight percent, preferably up to 80 weight percent.

Though said denatured silicone oil can be prepared by various well known methods, commercial products can also be employed. Many commercial denatured silicone oils are now being sold for example by Shin-Etsu Silicon, Nihon Unica, Toshiba Silicon, Toray Silicon etc. The commercial products being provided by Shin-Etsu Silicon are as follows:

| Polyether-type | : KF-351, KF-352, KF-353, KF-615, KF-6011, KF-6004 |
| Methylstyryl-type | : KF-410 |
| Alkyl-type | : KF-412, KF-413 |
| Higher fatty acid ester-type | : KF-910 |
| Higher alkoxy-type | : KF-851 |
| Fluoro-type | : X-22-819 |

Silicone-based surfactants which are sold as foaming agents for making urethane foams can also be employed as the denatured silicone oil. Silicone-based surfactants are polyether-type silicone oils, in which the degree of denaturization and the degree of polymerization are adjusted to improve the surfactant function. Commercial silicone-based surfactants can also be employed in this invention.

The denatured silicone oil can be soluble or uniformly dispersed in the polyisocyanate. The mixture gives stable and normal composition. At least 0.0001 parts by weight ("pbw"), preferably at least 0.0005 pbw, more preferably at least 0.001 pbw, and up to 4 pbw preferably up to 0.5 pbw of denatured silicone oil is employed per 100 pbw polyisocyanate. When the composition is stored or used, it is necessary to pay attention to the water content, because an insoluble urea adduct is often produced by the reaction of the composition with atmospheric water.

The following isocyanates and solvents soluble in the composition can be employed.

Isocyanates:
aliphatic polyisocyanates such as ethylene diisocyanate, 1,6-hexamethylene diisocyanate, cyclic polyisocyanates such as cyclobutane-1,3-diisocyanate, cyclohexane-1,3- and 1-,4-diisocyanate, aromatic polyisocyanates such as m-phenylene diisocyanate, 2,4-and 2,6-tolilene diisocyanate, isophoron diisocyanate, and oligomers thereof, a mixture of oligomers, compounds denatured with carbodiimide, urethane biulet, isocyanate etc.

Solvents:
carbonate esters such as ethylenecarbonate and propylenecarbonate, silicic acid esters, phosphoric esters such as chloroalkyl phosphate, dimethylmethyl phosphate, polymeric phosphates and brominated phosphate compounds, carboxylic esters such as acetyl acid ester, phthalic acid ester and trimellitic acid ester, aromatic hydrocarbons such as benzene, toluene or xylene and chlorinated, nitrated or halogenated aromatic hydrocarbons, other esters for example esters of hydroxyethers, hydroxyethers, freons, halocarbons, chlorinated alkanes, other ethers, and other aromatic or aliphatic solvents.

A number of preferred embodiments are described in the following Examples. It is to be understood, however, that the invention is not to be limited by the embodiments described in the following Examples. The term "AE" or "CE" in the Tables means "Actual Example" or "Comparative Example" respectively.

## EXAMPLES 1 TO 22 AND COMPARATIVE EXAMPLES 1 TO 33

Various polyisocyanate compositions were prepared by mixing various polyisocyanate compounds shown in Tables 1, 2, and 3 with denatured silicone oils, and, for comparison purposes, with xylene and with a trischloroethyl phosphate. The results of the evaluation are shown in the Tables.

The MDI content was determined by employing High Speed Gel Permeation Chromatography "HLC-8020" (produced by Tohso). The dimer content was determined by employing Infrared Spectroscopy "IR-700" (produced by Nihon Bunkou). The viscosity was measured under 25°C by employing Rotational Viscometer "E-type" (produced by Tokyo Keiki).

The additives employed In the actual and comparative examples are as follows. The amount of additive added is given as "pbw" per 100 pbw polyisocyanate.

| L:720 | : denatured silicone oil (polyether-type, produced by Nihon Unica) |
| Xylene | : special grade (produced by Kanto Chemical) |
| CLP | : trischloroethyl phosphate (produced by |

3

Wako Junyaku)

L-5340    : silicone-based surfactant (produced by

Nihon Unica).

The solubility test was evaluated by visual observation. The meaning of "A", "B" and "C" is as follows:

A    : Soluble

B    : Dispersive

C    : Separative

A case wherein urea adduct was prepared by the reaction of polyisocyanate with atmospheric water was evaluated as "A", and a case wherein denatured silicone oil separated from polyisocyanate was evaluated as "C".

The storage stability at low temperature was evaluated for 2 or 4 weeks at -10°C by visual observation. The meaning of "A", "B" and "C" is as follows:

A    : Stable (no change)

B    : No disposition of crystals but muddy

C    : Disposition of crystals.

## EXAMPLES 23 TO 66

Various polyisocyanate compositions were prepared by mixing various denatured silicone oils shown in Table 4 and Table 5 with the polyisocyanate compound (MDI content: 48.3 weight percent) employed in comparative example 4. The results of the evaluation are shown in Table 4 and Table 5.

## EXAMPLES 67 TO 72

Various polyisocyanate compositions were prepared by mixing 0.1 weight percent of various denatured silicone oil shown in Table 6 with the polyisocyanate compound (MDI content: 49.5 weight percent) employed in comparative example 20. The results of the evaluation are shown in Table 6.

## Claims

1.    A polyisocyanate composition comprising diphenylmethane diisocyanate oligomer and from 40 to 62 weight percent based on the total polyisocyanate of diphenylmethane diisocyanate or a derivative thereof, wherein the composition also comprises from 0.0001 to 4 parts by weight per 100 parts by weight of polyisocyanate of a denatured silicone oil which is inactive to the polyisocyanate.

2.    A polyisocyanate composition as claimed in Claim 1, wherein the denatured silicone oil is a polyether-type denatured silicone oil.

3.    A polyisocyanate composition as claimed in Claim 2, wherein the polyether-type denatured silicone oil is a polysiloxane-polyoxyalkyleneoxide copolymer.

4.    A polyisocyanate composition as claimed in any one of the preceding claims, wherein the amount of the denatured silicone oil is from 0.0005 to 3 parts by weight based on 100 parts by weight of the polyisocyanate.

5.    A polyisocyanate composition as claimed in any one of the preceding claims, wherein the diphenylmethane diisocyanate oligomer contains from 44 to 55 weight percent diphenylmethane diisocyanate.

6.    A polyisocyanate composition as claimed in any one of the preceding claims, wherein the viscosity at 25°C of the polyisocyanate compound is from 55 to 140 cps.

7.    The use of a denatured silicone oil as an additive to improve the low temperature storage stability of a polyisocyanate.